(19) Europäisches Patentamt
European Patent Office
Office européen des brevets

(11) Veröffentlichungsnummer: **0 391 264 B1**

(12) # EUROPÄISCHE PATENTSCHRIFT

(45) Veröffentlichungstag der Patentschrift: **18.01.95**

(51) Int. Cl.$^6$: **C09B 62/04**, D06P 1/382

(21) Anmeldenummer: **90106094.7**

(22) Anmeldetag: **30.03.90**

Die Akte enthält technische Angaben, die nach dem Eingang der Anmeldung eingereicht wurden und die nicht in dieser Patentschrift enthalten sind.

(54) **Reaktivfarbstoffe, die zwei oder drei stickstoffhaltige Halogen-heterocyclen als Reaktivgruppen aufweisen.**

(30) Priorität: **01.04.89 DE 3910649**

(43) Veröffentlichungstag der Anmeldung:
**10.10.90 Patentblatt 90/41**

(45) Bekanntmachung des Hinweises auf die Patenterteilung:
**18.01.95 Patentblatt 95/03**

(84) Benannte Vertragsstaaten:
**CH DE FR GB IT LI**

(56) Entgegenhaltungen:
**CH-A- 415 900**
**DE-A- 1 965 677**
**FR-A- 2 341 626**
**FR-A- 2 371 491**
**GB-A- 2 007 701**

**CHEMICAL ABSTRACTS, Band 97, Nr. 4, Juli 1982, Seite 71, Zusammenfassung Nr.25147u, Columbus, Ohio, US; & JP-A-82 05 905 (MITSUBISHI CHEMICAL INDUSTRIES CO., LTD) 02-02-1982**

(73) Patentinhaber: **BASF Aktiengesellschaft**
**Carl-Bosch-Strasse 38**
**D-67063 Ludwigshafen (DE)**

(72) Erfinder: **Jessen, Joerg L., Dr.**
**Maulbeerstueck 20**
**D-6720 Speyer (DE)**
Erfinder: **Pandl, Klaus, Dr.**
**Schumannstrasse 18**
**D-6700 Ludwigshafen (DE)**
Erfinder: **Loeffler, Hermann**
**Haydnstrasse 23**
**D-6720 Speyer (DE)**
Erfinder: **Siegel, Bernd, Dr.**
**Faberstrasse 39**
**D-6700 Ludwigshafen (DE)**
Erfinder: **Patsch, Manfred, Dr.**
**Fritz-Wendel-Strasse 4**
**D-6706 Wachenheim (DE)**

**EP 0 391 264 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe der Formel I

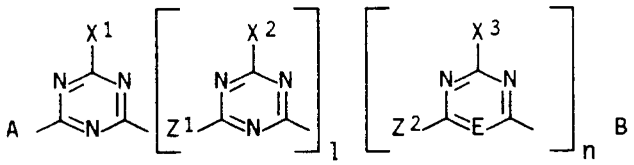

(I),

in der

| | |
|---|---|
| l | 0 oder 1, |
| n | 0 oder 1, |
| E | Stickstoff |
| A | den Rest eines Azofarbstoffs, der über eine Imino- oder $C_1$-$C_4$-Alkyliminogruppe an den Triazinring gebunden ist, |
| B | den Rest eines Azofarbstoffs oder eines Formazanfarbstoffs, der jeweils über eine Imino- oder $C_1$-$C_4$-Alkyliminogruppe an den Triazinring gebunden ist, |
| $X^1$ und $X^2$ | jeweils Chlor, |
| $X^3$ | Chlor und |
| $Z^1$ und $Z^2$ | gleich oder verschieden sind und unabhängig voneinander jeweils einen Rest der Formel |

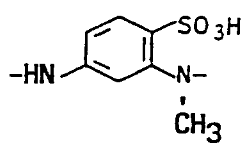

,

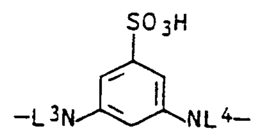

oder

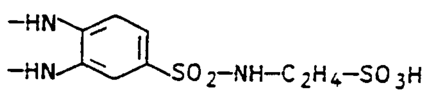

,

wobei $L^3$ und $L^4$ gleich oder verschieden sind und unabhängig voneinander jeweils für Wasserstoff oder gegebenenfalls durch Cyano oder Hydroxy substituiertes $C_1$-$C_4$-Alkyl stehen, bedeuten,

mit der Maßgabe, daß l und n nicht gleichzeitig für 0 stehen, und daß wenn n 0 ist und $Z^1$ für den Rest der Formel

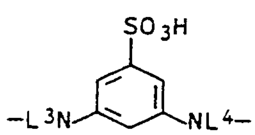

,

in der $L^3$ und $L^4$ jeweils die obengenannte Bedeutung besitzen, steht, A auch den Rest eines Formazanfarbstoffs, der über eine Imino- oder $C_1$-$C_4$-Alkyliminogruppe an den Triazinring gebunden ist, bedeuten kann verdoppelte Formazanfarbstoffe sowie die Verwendung der neuen Farbstoffe zum Färben oder Bedrucken von Hydroxygruppen oder Stickstoff enthaltenden Substraten.

In den älteren Patentanmeldungen EP-A-315 045 sowie DE-A-3 840 653 sind Reaktivfarbstoffe beschrieben, die als Reaktivanker zwei oder drei Halogentriazinreste aufweisen und bei denen der Chromophor ein Kupfer-Formazan darstellt.

Die DE-A-1 965 677, FR-A-2 371 491, FR-A-2 341 626 und GB-A-2 007 701 beschreiben u.a. Farbstoffe, die denen der Formel I ähnlich sind. Der Rest $Z^1$ leitet sich dort jeweils von 2,4-Diaminobenzolsulfonsäure ab.

Schließlich ist aus dem JP-Patent Nr. 5905/1982 (vgl. Chem. Abstracts Band 97, 251 470, 1982) u.a. ein Farbstoff mit einem Brückenglied auf Basis von 3,5-Diaminobenzoesäure bekannt.

Aufgabe der vorliegenden Erfindung war es nun, neue Reaktivfarbstoffe mit zwei oder drei Halogentriazinankern bereitzustellen, die auch andere chromophore Systeme aufweisen und über vorteilhafte anwendungstechnische Eigenschaften verfügen sollten.

Demgemäß wurden die oben näher bezeichneten Reaktivfarbstoffe der Formel I gefunden.

Alle in der Formel I auftretenden Alkylgruppen können sowohl geradkettig als auch verzweigt sein.

Reste $L^3$ und $L^4$ sind beispielsweise Methyl, Ethyl, Propyl, Isopropyl, Butyl, Isobutyl, sec-Butyl, 2-Cyanoethyl, 2- oder 3-Cyanopropyl, 1- oder 2-Cyanoprop-2-yl, 2- oder 4-Cyanobutyl, 2-Hydroxyethyl, 2- oder 3-Hydroxypropyl oder 2- oder 4-Hydroxybutyl.

Stellt der Rest B in Formel I den Rest eines Azofarbstoffs dar, so kann er entweder identisch mit dem Rest A oder auch verschieden von ihm sein.

Stellt der Rest B in Formel I den Rest eines Formazanfarbstoffs dar, so kann er, wenn n 0 ist und $Z^1$ für den Rest der Formel

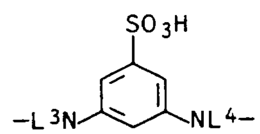,

in der $L^3$ und $L^4$ jeweils die obengenannte Bedeutung besitzen, steht, identisch mit dem Rest A oder auch verschieden von ihm sein.

Besonders bevorzugt sind Reaktivfarbstoffe der Formel I, in der B den Rest eines Azofarbstoffs, der über eine Imino- oder $C_1$-$C_4$-Alkyliminogruppe an den Triazinring gebunden ist, bedeutet.

Insbesondere hervorzuheben sind Reaktivfarbstoffe der Formel I, in der B mit dem Rest A identisch ist.

Die Reste A und B in Formel I stellen z.B. einen gegebenenfalls metallisierten Rest eines Azofarbstofs dar, der eine Imino- oder $C_1$-$C_4$-Alkyliminogruppe besitzt, an die der Triazinring gebunden ist. Die den neuen Reaktivfarbstoffen der Formel I zugrundeliegenden aminogruppenhaltigen Azofarbstoffe sind an sich bekannt und in großer Zahl beschrieben, z.B. in Venkataraman "The Chemistry of Synthetic Dyes", Band 6, Seiten 213 bis 297, Academic Press, New York, London, 1972. Die Azofarbstoffe, die eine Amino- oder $C_1$-$C_4$-Monoalkylaminogruppe aufweisen, an die der Triazinring gebunden wird, gehorchen der Formel III

$$D\text{-}N = N\text{-}K\,(\text{-}N = N\text{-}D)_a \qquad \text{(III)},$$

in der D den Rest einer Diazokomponente, K den Rest einer Kupplungskomponente und a 0 oder 1 bedeuten.

Wertvolle Farbstoffe sind z.B. wasserlösliche Azofarbstoffe, insbesondere Monoazofarbstoffe, der Formel III (a = 0), die Hydroxysulfonyl- und/oder Carboxylgruppen aufweisen können.

Bevorzugt sind nichtmetallisierte Azofarbstoffe, insbesondere solche, die Sulfonsäure- und/oder Carboxylgruppen enthalten, wobei jene, die 1 bis 6 Sulfonsäuregruppen aufweisen, besonders hervorzuheben sind.

Wichtige Azofarbstoffe sind beispielsweise solche der Phenyl-azo-naphthalin-, Phenyl-azo-1-phenylpyrazol-5-on-, Phenylazo-benzol-, Naphthyl-azo-benzol-, Phenylazo-aminonaphthalin-, Naphthyl-azo-naphthalin-, Naphthyl-azo-1-phenylpyrazol-5-on-, Phenyl-azo-pyridon, Phenyl-azo-aminopyridin, Naphthyl-azo-pyridon-, Naphthyl-azo-aminopyridin oder Stilbylazo-benzolreihe.

Weiterhin besonders bevorzugt sind Reaktivfarbstoffe der Formel I, in der A und/oder B einen Rest der Formel IV

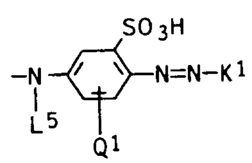 (IV),

bedeuten, in der $L^5$ für Wasserstoff oder $C_1$-$C_4$-Alkyl, $Q^1$ für Wasserstoff, $C_1$-$C_4$-Alkyl, Chlor, oder Hydroxysulfonyl, und $K^1$ für den Rest einer Kupplungskomponente der Naphthalin-, Pyrazolon-, Pyridon- oder Hydroxypyrimidinreihe stehen.

Weiterhin besonders bevorzugt sind Reaktivfarbstoffe der Formel I, in der A und/oder B einen Rest der Formel V

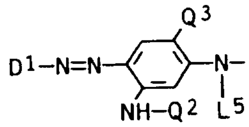

(V),

bedeuten, in der $L^5$ die obengenannte Bedeutung besitzt, $Q^2$ für $C_1$-$C_4$-Alkanoyl, Carbamoyl, $C_1$-$C_4$-Mono- oder Dialkylcarbamoyl, Phenylcarbamoyl oder Cyclohexylcarbamoyl, $Q^3$ für Wasserstoff, $C_1$-$C_4$-Alkyl, $C_1$-$C_4$-Alkoxy, Hydroxysulfonyl oder Chlor und $D^1$ für den Rest einer Diazokomponente der Anilin- oder Naphthalinreihe stehen.

Weiterhin besonders bevorzugt sind Reaktivfarbstoffe der Formel I, in der A und/oder B einen Rest der Formel VI

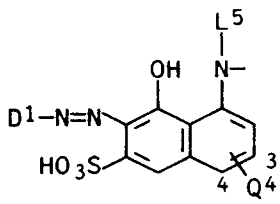

(VI),

bedeuten, in der $D^1$ und $L^5$ jeweils die obengenannte Bedeutung besitzen und $Q^4$ für Hydroxysulfonyl in Ringposition 3 oder 4 steht.

Weiterhin besonders bevorzugt sind Reaktivfarbstoffe der Formel I, in der A und/oder B einen Rest der Formel VII

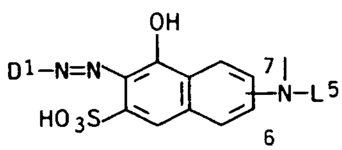

(VII),

bedeuten, in der $D^1$ und $L^5$ jeweils die obengenannte Bedeutung besitzen und wobei die Gruppe -$NL^5$- in Ringposition 6 oder 7 steht.

Weiterhin besonders bevorzugt sind Reaktivfarbstoffe der Formel I, in der A und/oder B einen Rest der Formel VIIIa oder VIIIb

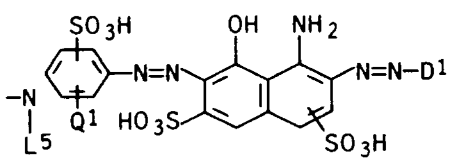

(VIIIa)

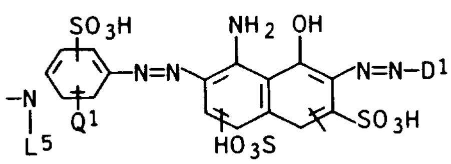

(VIIIb)

bedeuten, wobei $D^1$, $L^5$ und $Q^1$ jeweils die obengenannte Bedeutung besitzen.

Weiterhin besonders bevorzugt sind Reaktivfarbstoffe der Formel I, in der A und/oder B einen Rest der Formel IX

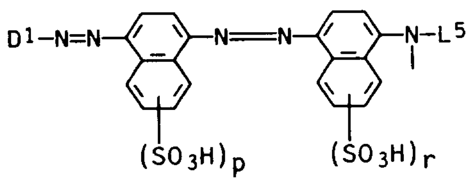

(IX),

bedeuten, in der $D^1$ und $L^5$ jeweils die obengenannte Bedeutung besitzen und p und r für 0,1 oder 2 stehen.

Aromatische Reste D der Diazokomponenten der Anilin- und Aminonaphthalinreihe leiten sich beispielsweise von Aminen der Formel X a-f

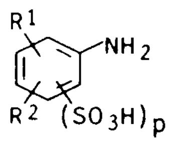

(Xa) ,

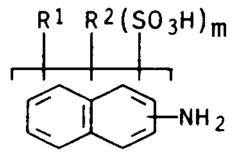

(Xb) ,

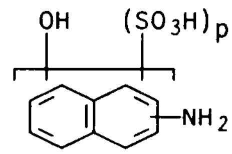

(Xc) ,

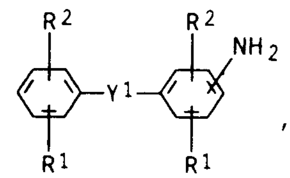

(Xd) ,

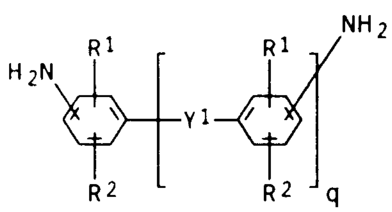

(Xe) ,

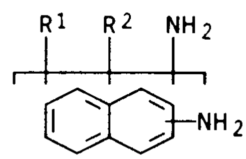

(Xf)

ab, wobei

- m 0, 1, 2 oder 3,
- p 0, 1 oder 2
- q 0 oder 1,
- $R^1$ Wasserstoff, Methyl, Ethyl, Methoxy, Ethoxy, Acetyl, Cyano, Carboxyl, $R^1$ Hydroxysulfonyl, $C_1$-$C_4$-Alkoxycarbonyl, Hydroxy, Carbamoyl, $C_1$-$C_4$-Mono- oder Dialkylcarbamoyl, Fluor, Chlor, Brom oder Trifluormethyl,
- $R^2$ Wasserstoff, Methyl, Ethyl, Methoxy, Ethoxy, Cyano, Carboxyl, Hydroxysulfonyl, Acetylamino, $C_1$-$C_4$-Alkoxycarbonyl, Carbamoyl, $C_1$-$C_4$-Mono- oder Dialkylcarbamoyl, Fluor, Chlor, Nitro, Sulfamoyl, $C_1$-$C_4$-Mono- oder Dialkylsulfamoyl, $C_1$-$C_4$-Alkylsulfonyl, Phenylsulfonyl oder Phenoxy und
- $Y^1$ eine direkte Bindung, Sauerstoff, Schwefel oder die Gruppe -NHCO-, -CONH-, -NH-CO-NH-, -CO-, $-NHSO_2-$, $-SO_2NH-$, $-SO_2-$, -CH = CH-, $-CH_2-CH_2-$, $-CH_2-$, -NH-, oder -N = N- bedeuten.

Bevorzugt sind solche Komponenten, in denen $R^1$ Wasserstoff, Methyl, Methoxy, Carboxyl, Hydroxysulfonyl, Hydroxy oder Chlor, $R^2$ Wasserstoff, Methyl, Methoxy, Carboxyl, Hydroxysulfonyl, Acetylamino oder Chlor und $Y^1$ die Gruppe -CO-, $-SO_2-$, -CH = CH-, $-CH_2-CH_2-$, $-CH_2-$oder -N = N- bedeuten.

Aromatische Amine die sich als Diazokomponenten eignen und die der Formel Xa, Xb, Xc oder Xd entsprechen, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 4-Butylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-(p-Tolylsulfonyl)anilin, 2-Ethoxy-1-naphthylamin, 1-Naphthylamin, 2-Naphthylamin, 4-Benzoylamino-2-ethoxyanilin, 4-Methyl-sulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethyl-anilin-3- oder -4-sulfonsäure, 3-Acetylamino-6-sulfonsäure, 4-Acetyl-amino-2-hydroxysulfonylanilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfon-säure, 1-Aminonaphthalin-4,6,8-trisulfonsäure, 2-Mapththylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonapthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8- oder -4,6-disulfonsäure, 4-Amino-diphenylamin, 4-Amino-4'-methoxydiphenylamin, 4-Amino-4'-methoxy-diphenylamin-3-sulfonsäure, 4-(2'-Methyl-phenylazo)-2-methylanilin, 4-Aminoazobenzol, 4'-Nitrophenylazo-1-aminonaphthalin, 4-(6'-Hydroxy-sulfonylnaphthylazo)-1-aminonaphthalin, 4-(2',5'-Dihydroxy-sulfonylphenylazo)-1-aminonaphthalin, 4'-Amino-3'-methyl-3-nitrobenzophenon, 4-Aminobenzophenon, 4-(4'-Aminophenylazo)-benzolsulfonsäure, 4-(4'-Amino-3'-methoxyphenylazo)benzolsulfonsäure oder 2-Ethoxy-1-naphthylamin-6-sulfonsäure.

Aromatische Diamine, die sich als Di- oder Tetrazokomponenten eignen und die der Formel Xe oder Xf entsprechen, sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3'-Diaminodiphenylsulfon, 4,4'-Diaminodiphenylsulfon, 4,4'-Diaminostilben-2,2'-disulfonsäure, 2,7'Diaminodiphenylsulfon, 2,7'-Diaminodiphenylsulfon-4,5-disulfonsäure, 4,4'-Diaminobenzophenon, 4,4'-Diamino-3,3'-dinitrobenzophenon, 3,3'-Diamino-4,4'-dichlorbenzophenon, 4,4'- oder 3,3'-Diaminodiphenyl, 4,4'-Diamino-3,3'-dichlordiphenyl, 4,4'-Diamino-3,3'-dimethoxy- oder -3,3'-dimethyl- oder -2,2'-dimethyl- oder -2,2' -dichlor- oder -3,3'-diethoxydiphenyl, 4,4'-Diamino-3,3'-dimethyl-6,6'-dinitrodiphenyl, 4,4'-Diaminodiphenyl-2,2'- oder -3,3'-disulfonsäure, 4,4'-Diamino-3,3'-dimethyl- oder -3,3'-dimethoxy oder -2,2'-dimethoxydiphenyl-6,6' -disulfonsäure, 4,4'-Diamino-2,2', 5,5'-tetrachlordiphenyl, 4,4'-Diamino-3,3'-dinitrodiphenyl, 4,4'-Diamino-2,2'-dichlor-5,5'-dimethoxydiphenyl, 4,4'-Diaminodiphenyl-2,2'- oder -3,3'-dicarbonsäure, 4,4'-Diamino-3,3'-dimethyldiphenyl-5,5'-disulfonsäure, 4,4'-Diamino-2-nitrodiphenyl, 4,4'-Diamino-3-ethoxy- oder -3-hydroxysulfonyldiphenyl, 4,4'-Diamino-3,3'-dimethyldiphenyl-5-sulfonsäure, 4-4'-Diaminodiphenylmethan, 4,4'-Diamino-3,3'-dimethyldiphenylmethan, 4,4'-Diamino-2,2',3,3'-tetramethyldiphenylmethan, 4,4'-Diaminodiphenylethan, 4,4'-Diaminostilben oder 4,4'-Diaminodiphenylmethan-3,3'-dicarbonsäure.

Die Reste K der Kupplungskomponente entstammen vorzugsweise der Anilin-, Naphthalin-, Pyrazol-, Pyridin, Pyrimidin-, Indol- oder Acylacetarylidreihe.

Kupplungskomponenten der Anilin- und Naphthalinreihe entsprechen beispielsweise den Verbindungen der Formel XIa-g

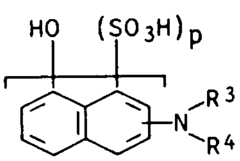
(XIa)
,
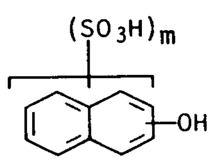
(XIb)
,
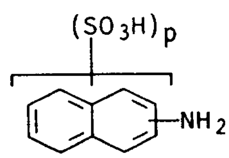
(XIb)
,
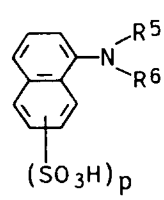
(XId)
,

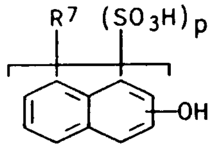
(XIe)
,
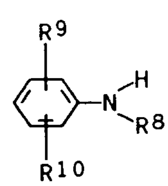
(XIf)
,
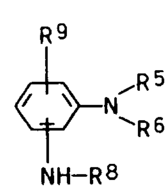
(XIg)
,

wobei

$R^3$ Wasserstoff oder $C_1$-$C_4$-Alkyl,

$R^4$ Wasserstoff, $C_1$-$C_4$-Alkyl oder Phenyl, das durch $C_1$-$C_4$-Alkyl, $C_1$-$C_4$-Alkoxy, Chlor, Brom oder Hydroxysulfonyl ein- oder zweifach substituiert sein kann,

$R^5$ Wasserstoff oder $C_1$-$C_4$-Alkyl, das durch Hydroxy, Cyano, Carboxyl, Hydroxysulfonyl, Hydroxysulfonyloxy, Methoxycarbonyl, Ethoxycarbonyl oder Acetoxy substituiert sein kann,

$R^6$ Wasserstoff, $C_1$-$C_4$-Alkyl, das durch Hydroxy, Cyano, Carboxyl, Hydroxysulfonyl, Hydroxysulfonyloxy, Methoxycarbonyl, Ethoxycarbonyl oder Acetoxy substituiert sein kann, Benzyl oder Phenyl, das durch $C_1$-$C_4$-Alkyl, $C_1$-$C_4$-Alkoxy, Chlor oder Hydroxysulfonyl substituiert sein kann,

$R^7$ $C_1$-$C_6$-Alkylureido, Phenylureido, das durch Chlor, Methyl, Methoxy, Nitro, Hydroxysulfonyl oder Carboxyl substituiert sein kann, $C_1$-$C_6$-Alkanoylamino, Cyclohexanoylamino, Benzoylamino, das durch Chlor, Methyl, Methoxy, Nitro, Hydroxylsulfonyl oder Carboxyl substituiert sein kann, oder Hydroxy,

$R^8$ Wasserstoff, $C_1$-$C_6$-Alkyl, insbesondere $C_1$-$C_4$-Alkyl, das jeweils durch Phenyl, $C_1$-$C_4$-Alkoxy, Hydroxy, Phenoxy oder $C_1$-$C_4$-Alkanoyloxy Substituiert sein kann, $C_5$-$C_7$-Cycloalkyl, Hydroxysulfonylphenyl, $C_1$-$C_4$-Alkanoyl, Carbamoyl, $C_1$-$C_4$-Mono- oder Dialkylcarbamoyl, Phenylcarbamoyl oder Cyclohexylcarbamoyl,

$R^9$ Wasserstoff, Methoxy, Ethoxy, Chlor, Brom, Acetylamino, Amino, Ureido, Methylsulfonylamino, Ethylsulfonylamino, Dimethylaminosulfonylamino, Methylamino, Ethylamino, Dimethylamino oder Diethylamino und

$R^{10}$ Wasserstoff, Methyl, Ethyl, Methoxy, Ethoxy, Chlor oder Brom bedeuten und

p und m jeweils die obengenannte Bedeutung besitzen.

Im einzelnen sind beispielsweise o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-toluidin zu nennen.

Naphtholsulfonsäuren sind beispielsweise 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Napthol-3,6-disulfonsäure, 2-Naphthol-6,8-disulfonsäure, 2-Napthol-3,6,8-trisulfonsäure, 1,8-Dihydroxynaphthalin-3,6-disulfonsäure, 2,6-Dihydroxynapthalin-8-sulfonsäure oder 2,8-Dihydroxynaphthalin-6-sulfonsäure.

Weiterhin sind beispielsweise 1-Naphthylamin, N-Phenyl-1-napthylamin, N-Ethyl-1-naphthylamin, N-Phenyl-2-naphthylamin, 1,5-Naphthylendiamin, 1,8-Naphthylendiamin, 1-Naphthol, 2-Naphthol, 1,5-Dihydroxynaphthalin, 1,6-Dihydroxynaphthalin, 1,7-Dihydroxynaphthalin, 2,7-Dihydroxynaphthalin, 2-Hydroxynaphthalin-3-carbonsäure-N-phenylamid, 2-Hydroxynaphthalin-3-carbonsäure-N-(2'-methoxyphenyl)amid oder 2-Hydroxynaphthalin-3-carbonsäure-N-(2',5'-dimethoxyphenyl)amid zu nennen.

Aminonaphthalinsulfonsäuren sind beispielsweise 1-Naphthylamin-6-sulfonsäure,1-Naphthylamin-7-sulfonsäure, 1-Naphthylamin-8-sulfonsäure, 2-Naphthylamin-3,6-disulfonsäure, 2-Naphthylamin-5,7-disulfonsäure oder 2-Naphthylamin-6,8-disulfonsäure.

Als Aminonaphtholsulfonsäuren sind z.B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxy-naphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxy-naphthalin-3,6-disulfonsäure, 1-Benzoylamino-8-hydroxynaphthalin-3,6-di-sulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure oder 2-(3'-oder 4'-Hydroxysulfonylphenyl)amino-8-hydroxynaphthalin-6-sulfonsäure zu nennen.

Von besonderer Bedeutung sind Kupplungskomponenten, die Sulfonsäuren- und/oder Carboxylgruppen aufweisen, und die in ortho- oder para-Stellung zu einer Hydroxy- und/oder Aminogruppe kuppeln.

Als Beispiele für solche Kupplungskomponenten seien 2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure genannt.

Kupplungskomponenten der weiteren Reihen sind beispielsweise: Pyrazolone Aminopyrazole, 2,6-Diaminopyridine, Pyridone, Hydroxy- oder Aminopyrimidine, Indole oder Acetoacetarylide.

Kupplungskomponenten dieser Reihe entsprechen dabei beispielsweise der Formel XIIa-f

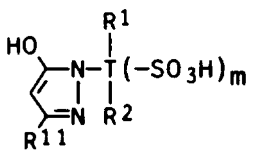 ,

(XIIa)

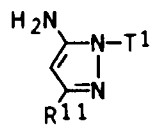 ,

(XIIb)

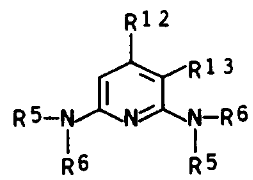 ,

(XIIc)

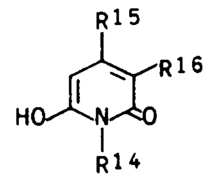 ,

(XIId)

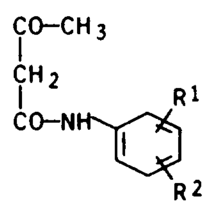 ,

(XIIe)

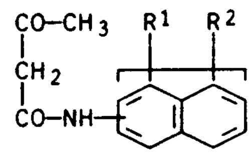 ,

(XIIf)

wobei

- T für einen Benzol- oder Naphthalinkern,
- $T^1$ für $C_1$-$C_4$-Alkyl, Cyclohexyl, Benzyl oder Phenyl, das ein- oder mehrfach durch Fluor, Chlor, Brom, Methyl, Methoxy, Nitro, Hydroxysulfonyl, Carboxyl, Acetyl, Acetylamino, Methylsulfonyl, Sulfamoyl oder Carbamoyl substituiert ist,
- $R^{11}$ für Methyl, Carboxyl, Methoxycarbonyl, Ethoxycarbonyl oder Phenyl,
- $R^{12}$ für Wasserstoff oder $C_1$-$C_4$-Alkyl, das durch Methoxy, Ethoxy oder Cyano substituiert sein kann,
- $R^{13}$ für Wasserstoff, Methyl, Hydroxysulfonylmethyl, Hydroxysulfonyl, Cyano oder Carbamoyl,
- $R^{14}$ für Wasserstoff, $C_1$-$C_4$-Alkyl, das durch Phenyl, Hydroxysulfonylphenyl, Hydroxy, Amino, Methoxy, Ethoxy, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, $C_1$-$C_4$-Alkyl, Acetyl oder Benzoyl substituiert ist,
- $R^{15}$ für $C_1$-$C_4$-Alkyl, Phenyl, Hydroxy, Cyano, Acetyl, Benzoyl, Carboxyl, Methoxycarbonyl, Carbamoyl oder Hydroxysulfonylmethyl und
- $R^{16}$ für Wasserstoff, Chlor, Brom, Acetylamino, Amino, Nitro, Hydroxysulfonyl, Sulfamoyl, Methylsulfonyl, Phenylsulfonyl, Carboxyl, Methoxycarbonyl, Acetyl, Benzoyl, Carbamoyl, Cyano oder Hydroxysulfonylmethyl stehen und $R^1$, $R^2$, $R^5$, $R^6$ und m jeweils die obengenannte Bedeutung besitzen.

Als Pyrazolon-Kupplungskomponenten sind beispielsweise 3-Methyl-, 3-Carboxy- oder 3-($C_1$-$C_4$-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Benzoyl, Acetyl, Acetylamino, Nitro, Hydroxyl, Carboxyl, Carbamoyl oder Sulfamoyl substituiertes Phenyl oder durch Hydroxysulfonyl substituiertes 1-, oder 2-Naphthyl tragen können. Beispielsweise sind 1-Phenyl-, 1-(2'-Chlorphenyl)-, 1-(2'-Methoxyphenyl)-, 1-(2'Methylphenyl)-, 1-(1',5'-Dichlorphenyl)-, 1-(2',6'-Dichlorphenyl)-,1-(2'-Methyl-6'-chlorphenyl)-, 1-(2'-Methoxy-5'-methylphenyl)-, 1-(2'-Chlor-5'-hydroxysulfonylphenyl)-, 1-(2'-Methoxy-5'-hydroxysulfonylphenyl)-, 1-(2',5'-Dichlor-4'-hydroxysulfonylphenyl)-, 1-(2',5'-Dihydroxysulfonylphenyl)-, 1-(2'-Carboxyphenyl)-, 1-(3'-Hydroxysulfonylphenyl)-, 1-(4'-Hydroxysulfonylphenyl)- oder 1-(3'-Sulfamoylphenyl)-3-carboxylpyrazol-5-on, 1-(3'- oder 4,-Hydroxysulfonylphenyl)-, 1-(2'-Chlorphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-8-naphthyl)-, 1-(6'-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Acetoacetanilide sind vor allem Acetessiganilid und dessen im Phenylkern durch Chlor, Methyl, Ethyl, Methoxy, Ethoxy, Acetylamino, Hydroxysulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind z.B. die in der DE-A-2 202 820, DE-A-2 308 663 oder DE-A-3 119 349 aufgeführten Verbindungen geeignet. Weiterhin sind Barbitursäure und deren N-Substitutionsprodukte zu nennen. Als N-Substituenten kommen dabei insbesondere $C_1$-$C_4$-Alkyl oder gegebenenfalls substituiertes Phenyl in Betracht.

Als Indolkupplungskomponenten sind beispielsweise 2-Methylindol, 2-Phenylindol, 2-Phenylindol-5-sulfonsäure, 1-Methyl-2-phenylindol, 1-(2'-Hydroxyethyl)-, 1-(2'-Carboxyethyl)-, 1-(2'Carbamoylethyl)-2-methylindol oder -2-phenylindol zu nennen.

Als Pyridonkupplungskomponenten sind beispielsweise 1-Ethyl-2-hydroxy-4-methyl-5-carbamoylpyrid-6-on, 1-(2'Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-hydroxysulfonylmethyl-5-carbamoylpyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2,6-Dihydroxy-4-ethyl-5-carbamoylpyridin, 1-Ethyl-2-hydroxy-4-methyl-5-hydroxy-sulfonylmethylpyrid-6-on, 1-Methyl-2-hydroxy-4-methyl-5-methyl-sulfonylpyrid-6-on oder 1-Carboxymethyl-2-hydroxy-4-ethyl-5-phenyl-sulfonylpyrid-6-on zu nennen.

Anstelle der Azofarbstoffreste können die Farbstoffe der Formel I auch entsprechende Metallkomplexfarbstoffreste enthalten. Als komplexierende Metalle kommen dabei insbesondere Kupfer, Kobalt, Chrom, Nickel oder Eisen in Betracht, wobei Kupfer, Kobalt oder Chrom bevorzugt sind.

Dabei befinden sich die metallisierten Gruppen vorzugsweise jeweils in ortho-Stellung zur Azogruppe, z. B. in Form von o,o'-Dihydroxy-, o-Hydroxy-o'-carboxy-, o-Carboxy-o'-amino oder o-Hydroxy-o'-aminoazogruppierungen.

Der Rest B sowie, wenn n 0 ist und $Z^1$ für den Rest der Formel

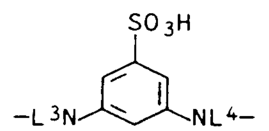

,

in der $L^3$ und $L^4$ jeweils die obengenannte Bedeutung besitzen, steht, auch der Rest A, können sich weiterhin z.B. von einem Formazanfarbstoff, insbesondere einem Kupfer-Formazanfarbstoff, ableiten.

Kupfer-Formazane sind an sich bekannt und beispielsweise in K. Venkataraman "The Chemistry of Synthetic Dyes", Vol. III, Academic Press, New York, London, 1970, beschrieben.

Besonders bevorzugt sind Reaktivfarbstoffe der Formel I, in der A und/oder B einen Rest der Formel XIII

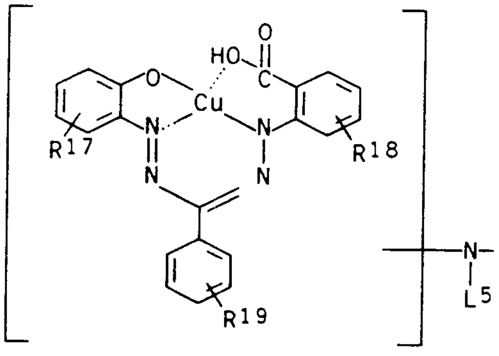

(XIII),

bedeuten, in der

$R^{17}$, $R^{18}$ und $R^{19}$ gleich oder verschieden sind und unabhängig voneinander jeweils für Wasserstoff

oder Hydroxysulfonyl stehen und

$L^5$ die obengenannte Bedeutung besitzt.

Eine Methode zur Herstellung der diesen Farbstoffen zugrundeliegenden Formazane ist beispielsweise in der älteren Patentanmeldung EP-A-315 046 beschrieben.

Ein weiterer Gegenstand der vorliegenden Anmeldung sind Reaktivfarbstoffe der Formel Ia

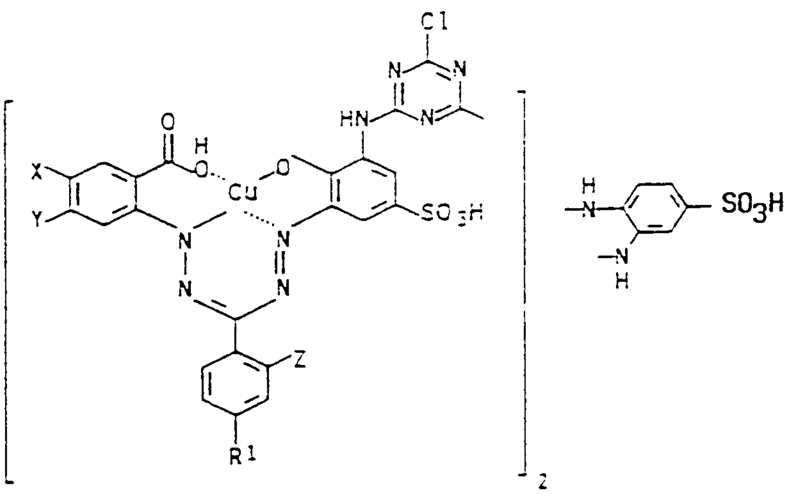

(Ia) ,

in der einer der beiden Reste X und Y Wasserstoff und der andere Hydroxysulfonyl,

Z Wasserstoff oder Hydroxysulfonyl und

$R^1$ Wasserstoff oder Fluor bedeuten.

Die Erfindung umfaßt auch bei denjenigen Reaktivfarbstoffen der Formel I und Ia, die eine oder mehrere Sulfonsäure- und/oder Carbonsäurereste aufweisen, deren Salze.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei in diesem Zusammenhang im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Die neuen Reaktivfarbstoffe der Formel I können nach an sich bekannten Methoden erhalten werden.

Im folgenden sind beispielhaft verschiedene Verfahrensweisen genannt.

a) Umsetzung des Farbstoffs der Formel XIV

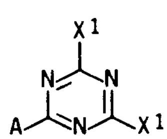

(XIV),

in der A und $X^1$ jeweils die obengenannte Bedeutung besitzen, mit der Verbindung der Formel XV

$Z^1H_2$ (XV),

in der $Z^1$ die obengenannte Bedeutung besitzt, im Molverhältnis 2:1, wobei ein Reaktivfarbstoff der Formel XVI resultiert

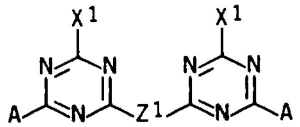

(XVI),

in der A, $X^1$ und $Z^1$ jeweils die obengenannte Bedeutung besitzen.

b) Umsetzung analog Methode a) jedoch im Molverhältnis 1:1 und anschließender Folgereaktion mit der Verbindung der Formel XVII

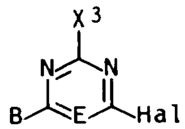

(XVII),

in der B, E und $X^3$ jeweils die obengenannte Bedeutung besitzen und Hal für Fluor oder Chlor steht, wobei ein Farbstoff der Formel XVIII resultiert

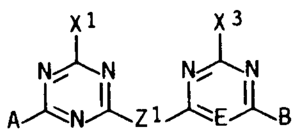

(XVIII),

in der A, B, E, $X^1$, $X^3$ und $Z^1$ jeweils die obengenannte Bedeutung besitzen.

c) Umsetzung der Verbindung XV ($Z^1H_2$) zunächst mit Cyanurfluorid oder -chlorid im Molverhältnis 1:2 und anschließend mit einer Verbindung der Formel IXX oder XX

AH (IXX) BH (XX),

wobei A und B jeweils die obengenannte Bedeutung besitzen.

d) Umsetzung des Farbstoffs XIV zunächst mit der Verbindung XV im Molverhältnis 1:1 danach Weiterreaktion mit Cyanurfluorid oder -chlorid, wobei Farbstoff der Formel XXI resultiert

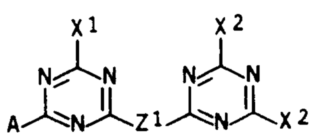

(XXI),

in der A, $X^1$, $X^2$ und $Z^1$ jeweils die obengenannte Bedeutung besitzen. Dieser Farbstoff kann dann gegebenenfalls nach folgendem Schema weiter umgesetzt werden:

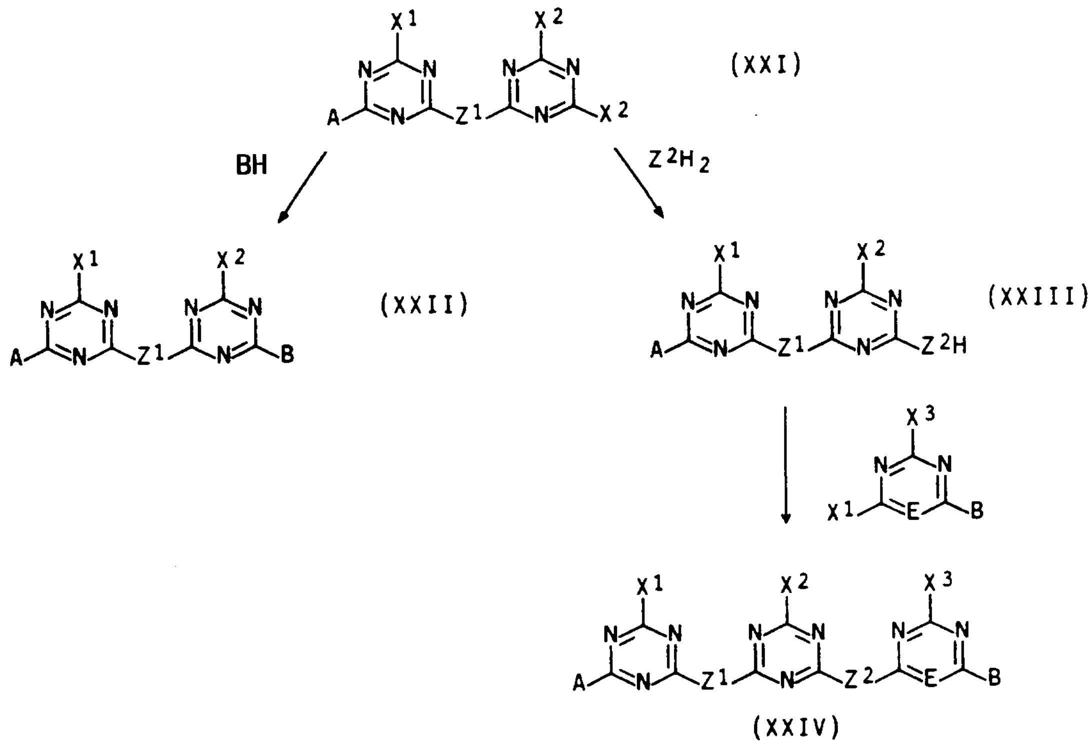


(XXI)

(XXII)

(XXIII)

(XXIV)

Weitere Angaben zur Herstellung können den Beispielen entnommen werden.

Die neuen Reaktivfarbstoffe der Formel I eignen sich zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Besonders vorteilhaft werden sie dabei nach dem Ausziehverfahren gefärbt.

Die erfindungsgemäßen Farbstoffe weisen eine gute Löslichkeit auf und besitzen ein sehr hoch liegendes Echtheitsniveau, insbesondere eine hohe Naßechtheit. Das Farbaufbauvermögen bei mittleren bis tiefen Färbungen ist besonders hoch.

Die folgenden Beispiele sollen die Erfindung näher erläutern.

Beispiel 1

a) Herstellung des Dichlortriazinfarbstoffs:
26,5 g (0,1 mol) des primären Kondensationsproduktes aus Cyanurchlorid und 1,3-Phenylendiamin-4-sulfonsäure wurden in 500 ml Eiswasser salzsauer diazotiert. 24,7 g (0,1 mol) 1-Ethyl-6-hydroxy-4-methyl-3-hydroxysulfonylmethylpyrid-2-on wurden zugesetzt und die Kupplung durch Zugabe von Natriumhydrogencarbonat bei pH 6 bis 7 und 5 bis 10 °C zu Ende geführt.

b) Herstellung des Monochlortriazinfarbstoffs:
Danach wurden 20,2 g (0,05 mol) 1-Amino-3-methylaminobenzol-4-sulfonsäure-Natriumsalz in 200 ml Wasser unter Zugabe von 0,01 mol Trinatriumphosphat und Natronlauge bei pH 3 bis 4 und 30 bis 35 °C gelöst. über 1 Stunde wurden 0,05 mol des unter a) hergestellten Dichlortriazinfarbstoffs (Syntheselösung) zugegeben, wobei der pH-Wert durch Zugabe von Natriumbicarbonat bei 3 bis 4 gehalten wurde. Der erhaltene Farbstoff entspricht der Formel

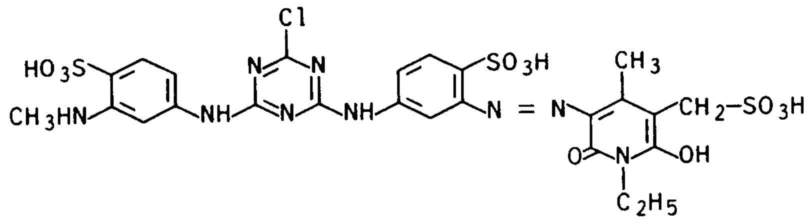

c) 0,05 mol des unter b) hergestellten Monochlortriazinfarbstoffs wurden bei pH 6 bis 7 und 50 bis 60 °C vorgelegt und 0,05 mol des unter a) hergestellten Dichlortriazinfarbstoffs über 1 Stunde zugetropft, wobei der pH-Wert durch Zugabe von Natriumbicarbonat bei pH 6 bis 7 gehalten wurde.

Als dünnschichtchromatographisch weder Dichlortriazinfarbstoff 1a) noch Monochlortriazinfarbstoff 1b) mehr nachweisbar waren, war die Kondensation beendet. Die Syntheselösung wurde sprühgetrocknet. Der erhaltene Farbstoff der Formel

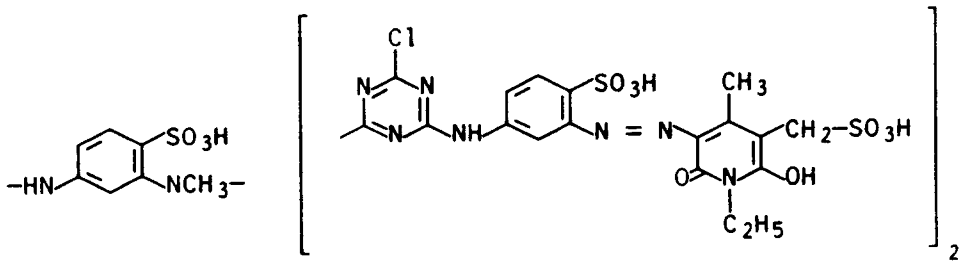

färbt Baumwolle in brillantem grünstichig gelbem Farbton von hohen Licht- und Naßechtheiten.

Ein Farbstoff gleicher Konstitution wie Beispiel 1c) wird erhalten, wenn 0,05 mol 1-Amino-3-methylaminobenzol-4-sulfonsäure und 0,1 mol Dichlorfarbstoff 1a) bei 50 bis 60 °C und pH 6 bis 7 kondensiert werden.

In analoger Weise werden die in der Tabelle 1 aufgeführten Farbstoffe erhalten.

Tabelle 1

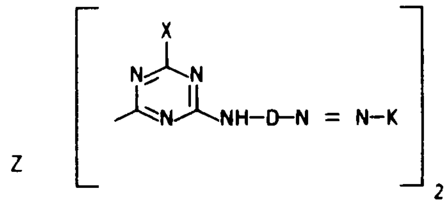

| Bsp.-Nr. | Z | X | D | K | Farbton auf Baumwolle |
|---|---|---|---|---|---|
| 2 | 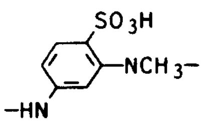 | Cl | 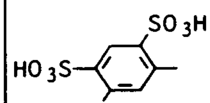 | 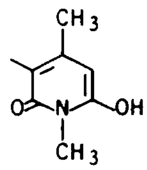 | grünstichig gelb |
| 3 | 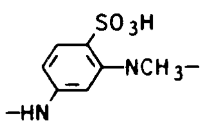 | Cl | 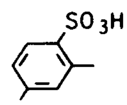 | 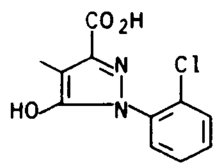 | grünstichig gelb |
| 4 | 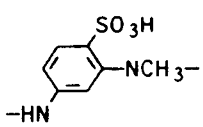 | Cl | 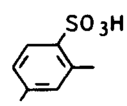 | 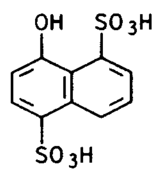 | orangerot |
| 5 | 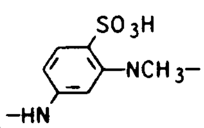 | Cl | 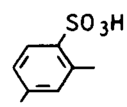 | 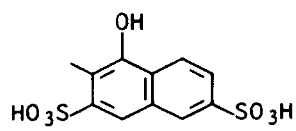 | orange |
| 6 | 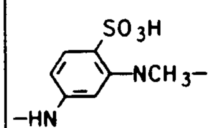 | Cl | 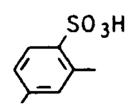 | 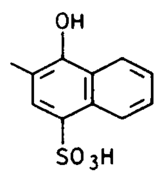 | scharlach-rot |
| 7 | 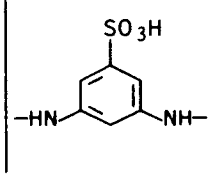 | Cl | 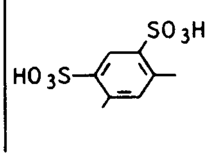 | 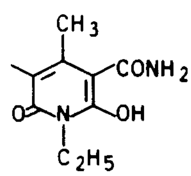 | grünstichig gelb |

Tabelle 1 (Fortsetzung)

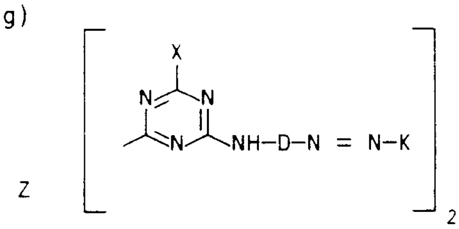

| Bsp.-Nr. | Z | X | D | K | Farbton auf Baumwolle |
|---|---|---|---|---|---|
| 8 | 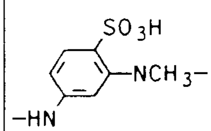 | Cl | 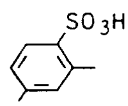 | 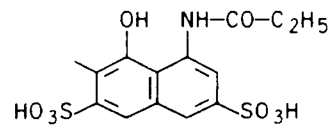 | rot |
| 9 | 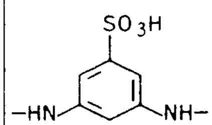 | Cl | 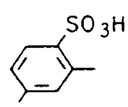 | 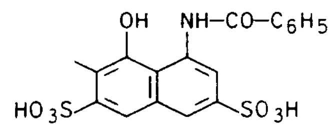 | rot |
| 10 | 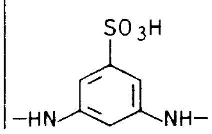 | Cl | 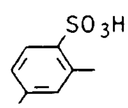 | 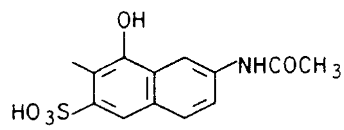 | orange |

Beispiel 11

53,2 g (0,1 mol) 4-(3',6',8'-Trihydroxysulfonylnaphth-2-ylazo)-3-ureidoanilin wurden in 800 ml Wasser bei pH 7 gelöst und bei 5 bis 10 °C und pH 6 bis 7 mit einer Suspension von 18,5 g (0,1 mol) Cyanurchlorid in Wasser versetzt. Nun wurden 9,4 g (0,05 mol) 1,3-Phenylendiamin-5-sulfonsäure zugesetzt und 2 Stunden bei 40 °C gerührt, wobei der pH-Wert durch Zugabe von Natriumhydrogencarbonat bei 6 bis 7 gehalten wurde. Der erhaltene Monochlortriazinfarbstoff entspricht der Formel

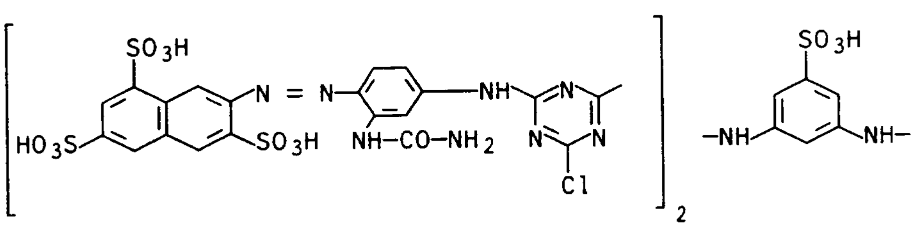

und wurde durch Zugabe von Kaliumchlorid ausgesalzen. Er färbt Baumwolle in goldgelben Farbtönen von guter Licht- und Naßechtheit.

In analoger Weise werden die in Tabelle 2 aufgeführten Farbstoffe erhalten.

Tabelle 2

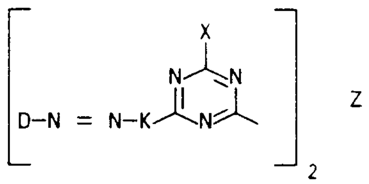

| Bsp.-Nr. | D | K | X | Z | Farbton auf Baumwolle |
|---|---|---|---|---|---|
| 12 | 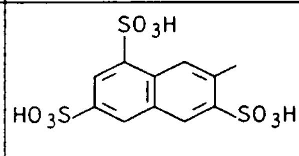 | 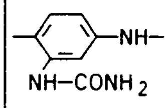 | Cl | 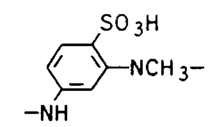 | goldgelb |
| 13 | 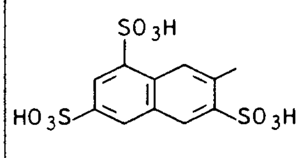 | 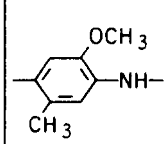 | Cl | 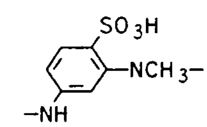 | goldgelb |
| 14 | 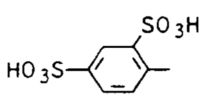 | 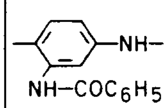 | Cl | 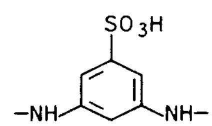 | goldgelb |
| 15 | 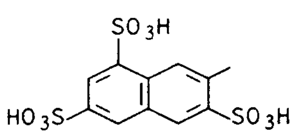 | 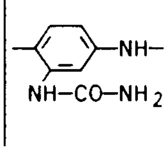 | Cl | 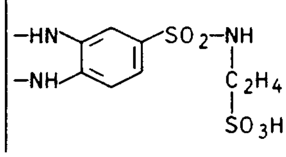 | goldgelb |

Beispiel 16

20,2 g (0,1 mol) 1-Amino-3-methylaminobenzol-4-sulfonsäure wurden in 200 ml Wasser bei pH 7 gelöst und auf 40 °C aufgeheizt. Dazu gab man 54,5 g (0,1 mol) des Kondensationsproduktes aus 4-(3',6',8'-Trihydroxysulfonylnaphth-2-ylazo)-3-ureidoanilin und Cyanurchlorid. Man hielt 3 Stunden bei 40 °C und hielt den pH-Wert durch Zugabe von Natriumbicarbonat bei 6 bis 7. Nach beendeter Umsetzung wurde auf 10 °C gekühlt und mit einer Suspension von 9,2 g (0,05 mol) Cyanurchlorid in 200 ml Eiswasser versetzt. Es wurde 1 Stunde bei 10 bis 15 °C und pH 6 bis 7 ($NaHCO_3$) gehalten. Die Lösung wurde filtriert und 2 Stunden bei 50 bis 60 °C und pH 6 bis 7 gerührt. Der gebildete Farbstoff wurde mit 400 g Kaliumchlorid gefällt, abgesaugt und unter vermindertem Druck getrocknet. Er entspricht der Formel

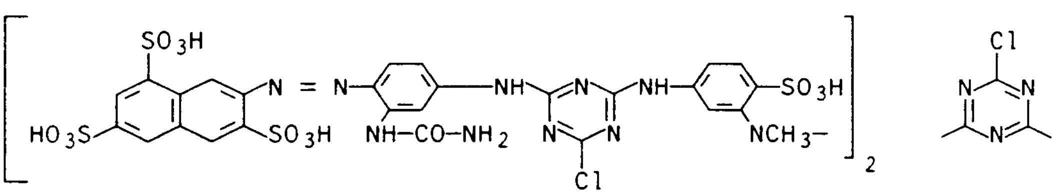

und färbt Baumwolle in goldgelben Farbtönen von guten Licht- und Naßechtheiten.

Beispiel 17

23,9 g (0,1 mol) 2-Amino-5-hydroxynaphthalin-7-sulfonsäure, gelöst in 250 ml Wasser, wurden bei 0 bis 5 °C und pH 5 bis 6 mit 18,4 g (0,1 mol) Cyanurchlorid umgesetzt. Nun setzte man 10,1 g (0,05 mol) 1-Amino-3-methylaminobenzol-4-sulfonsäure zu und hielt 3 Stunden bei 50 °C und pH 6 bis 7. 20,1 g (0,1 mol) salzsauer diazotierte 4-Methoxyanilin-2-sulfonsäure wurden zugesetzt und bei pH 4 bis 5 aufgekuppelt. Der erhaltene Farbstoff wurde bei pH 7 mit 400 g NaCl ausgesalzen, abgesaugt und bei 60 °C unter vermindertem Druck getrocknet. Er entspricht der Formel

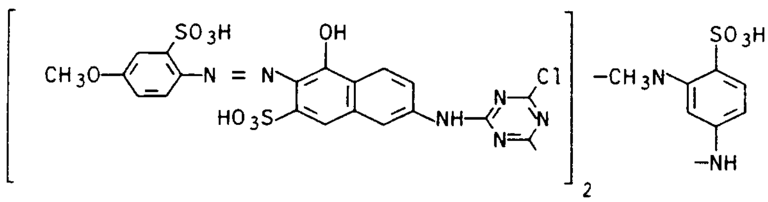

und färbt Baumwolle in orangen Tönen von guter Licht- und Naßechtheit.

In analoger Weise werden die in Tabelle 3 aufgeführten Farbstoffe erhalten.

Tabelle 3

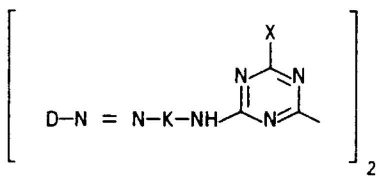

Z

| Bsp.-Nr. | D | K | X | Z | Farbton auf Baumwolle |
|---|---|---|---|---|---|
| 18 | 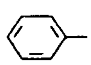 | 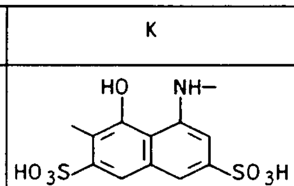 | Cl | 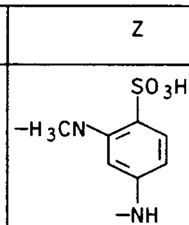 | rot |
| 19 | 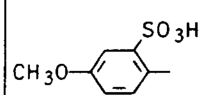 | 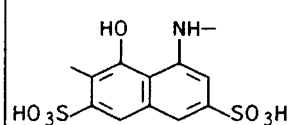 | Cl | 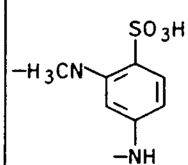 | blaustichig rot |
| 20 | 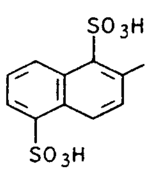 | 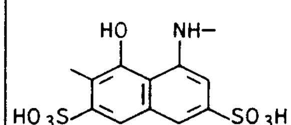 | Cl | 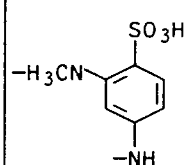 | rot |
| 21 | 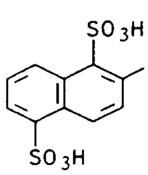 | 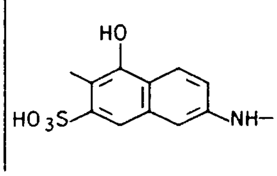 | Cl | 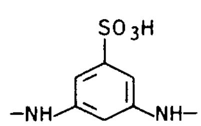 | orange |

Tabelle 3 (Fortsetzung)

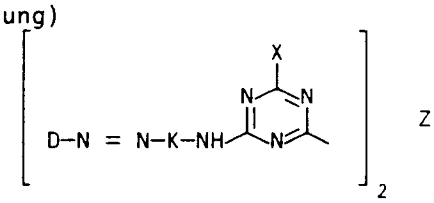

| Bsp.-Nr. | D | K | X | Z | Farbton auf Baumwolle |
|---|---|---|---|---|---|
| 22 | 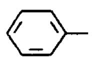 | 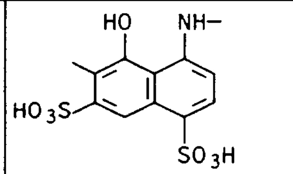 | Cl | 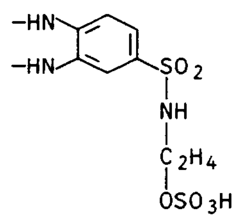 | rot |
| 23 | 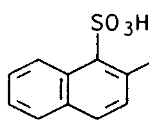 | 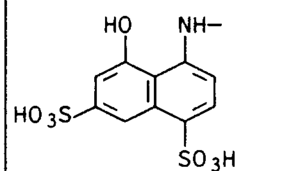 | Cl | 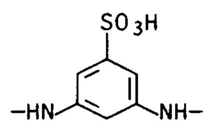 | rot |
| 24 | 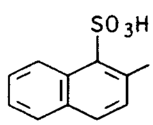 | 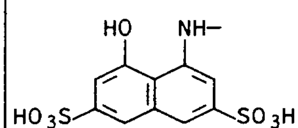 | Cl | 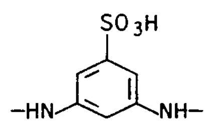 | blaustichig rot |
| 25 | 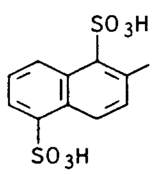 | 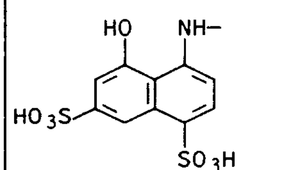 | Cl | 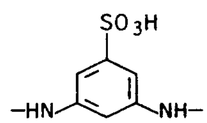 | rot |
| 26 | 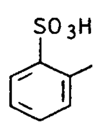 | 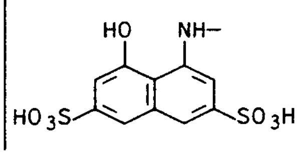 | Cl | 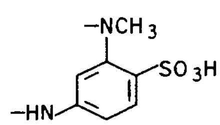 | gelbstichig rot |

Beispiel 27

Zu einer Lösung von 124 g des Natriumsalzes der Verbindung der Formel

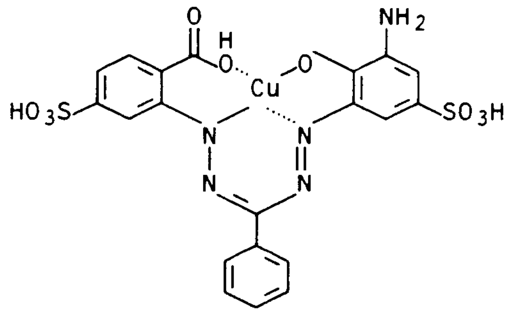

in 300 ml Wasser und 300 g Eis wurden 39 g Cyanurchlorid gegeben. Der pH-Wert des Reaktionsgemischs wurde bis zum Ende der Acylierung durch Zugabe von Natriumhydrogencarbonat bei 5 bis 5,5 gehalten. Nach 2 Stunden wurden 19 g 3,5-Diaminobenzolsulfonsäure, gelöst in 200 ml Wasser, eingetragen. Die Suspension wurde auf 60 °C erwärmt und der pH-Wert durch Zusatz von Natriumhydrogencarbonat bei 7 bis 8 gehalten. Nach 6 Stunden wurde der gebildete Farbstoff der Formel

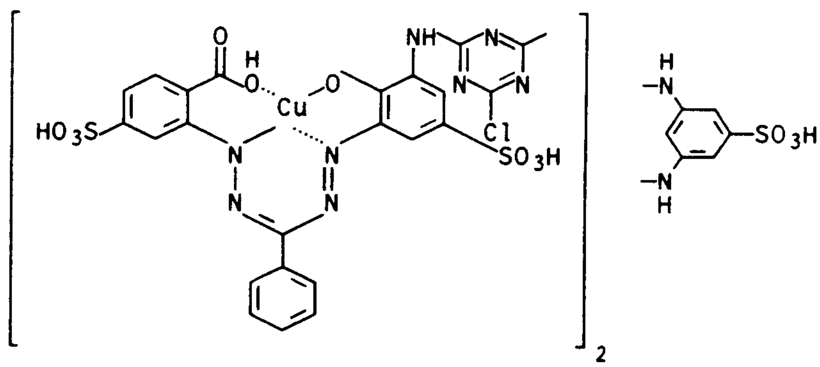

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen bemerkenswerte Stabilität gegenüber oxidativen Einflüssen auf.

In analoger Weise werden die in Tabelle 4 aufgeführten Farbstoffe der Formel

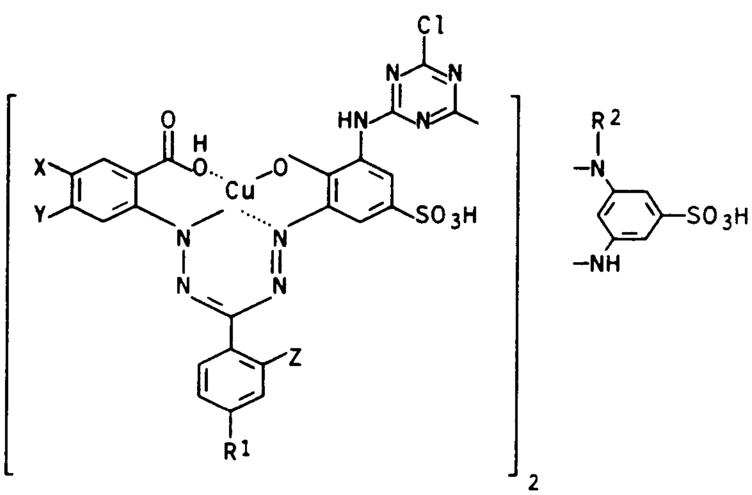

erhalten (als Natriumsalz). Bei Anwendung der üblichen Ausziehmethoden färben sie Cellulosefasern in blauen Tönen. Die Farbstoffe besitzen eine sehr gute Löslichkeit in Wasser, sind licht- und naßecht und zeigen gute Stabilität gegenüber oxidativen Einflüssen.

Tabelle 4

| Bsp.-Nr. | X | Y | Z | $R^1$ | $R^2$ |
|---|---|---|---|---|---|
| 28 | $SO_3H$ | H | H | H | H |
| 29 | H | $SO_3H$ | H | H | $CH_3$ |
| 30 | H | $SO_3H$ | H | F | H |
| 31 | H | $SO_3H$ | H | F | $CH_3$ |
| 32 | $SO_3H$ | H | H | F | H |
| 33 | $SO_3H$ | H | H | F | $CH_3$ |
| 34 | H | $SO_3H$ | $SO_3H$ | H | H |
| 35 | $SO_3H$ | H | $SO_3H$ | H | H |

Beispiel 36

Zu einer Lösung von 124 g des Natriumsalzes der Verbindung der Formel

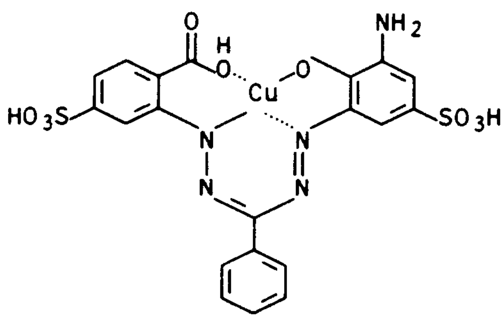

in 300 ml Wasser und 300 g Eis wurden 39 g Cyanurchlorid gegeben. Der pH-Wert des Reaktionsgemischs wurde bis zum Ende der Acylierung durch Zugabe von Natriumhydrogencarbonat bei 5 bis 5,5 gehalten. Nach 2 Stunden wurden 38 g 4-Amino-2-(N-methylamino)benzolsulfonsäure eingetragen. Die Suspension wurde auf 40 °C erwärmt und der pH-Wert bei 7 bis 8 gehalten. Nach 4 Stunden wurde der gebildete Farbstoff der Formel

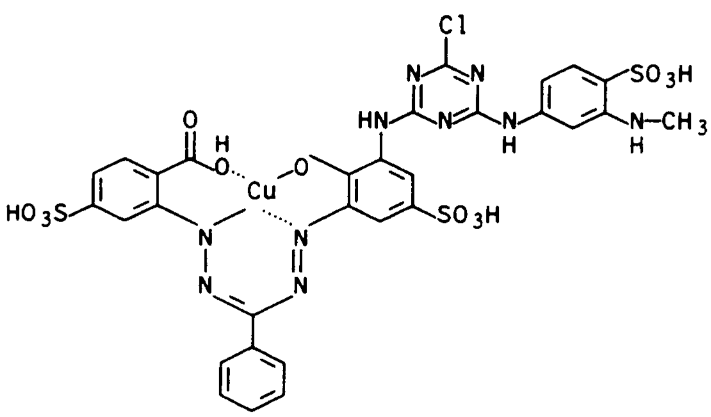

mit 120 g des Dichlortriazinfarbstoffs der Formel

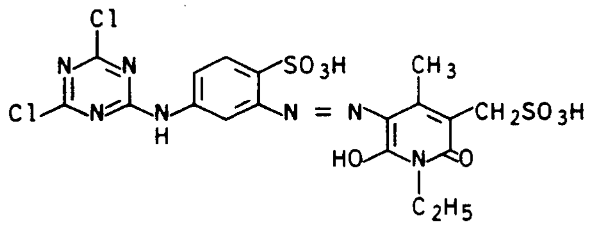

,

der analog Beispiel 1a erhalten und zuvor in 500 ml Wasser gelöst wurde, bei 60 °C umgesetzt. Bei dieser Temperatur wurde die Reaktion 6 Stunden lang gehalten, wobei durch Zugabe von Natriumhydrogencarbonat der pH-Wert zwischen 7,0 und 7,5 gehalten wurde. Durch Zugabe von Natriumchlorid wurde der gebildete Farbstoff der Formel

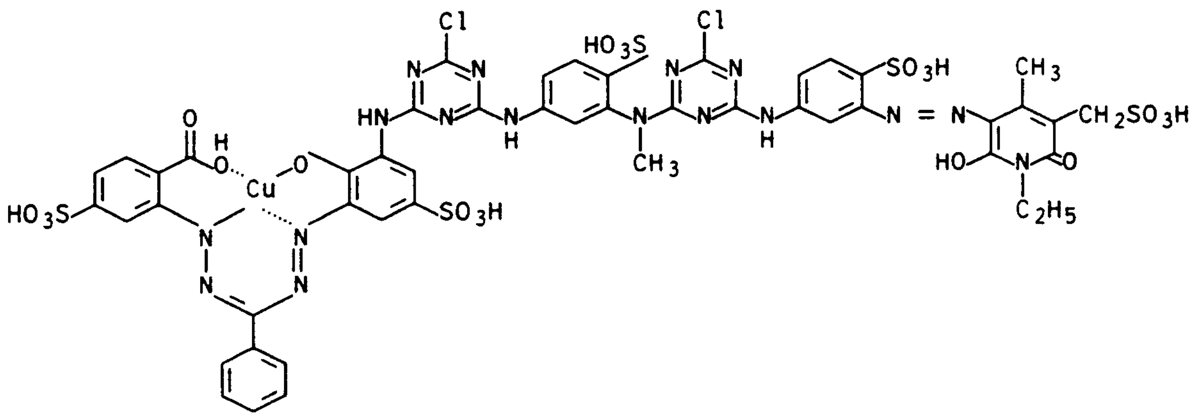

in Form seines Natriumsalzes ausgesalzen, abfiltriert und getrocknet. Das erhaltene olivgrüne Farbstoffpulver ist sehr gut wasserlöslich und färbt Baumwolle in klaren olivgrünen Tönen. Die Färbungen sind licht- und naßecht. Sie weisen eine bemerkenswerte Stabilität gegenüber oxidativen Einflüssen auf.

In analoger Weise werden die in Tabelle 5 aufgeführten Farbstoffe der Formel

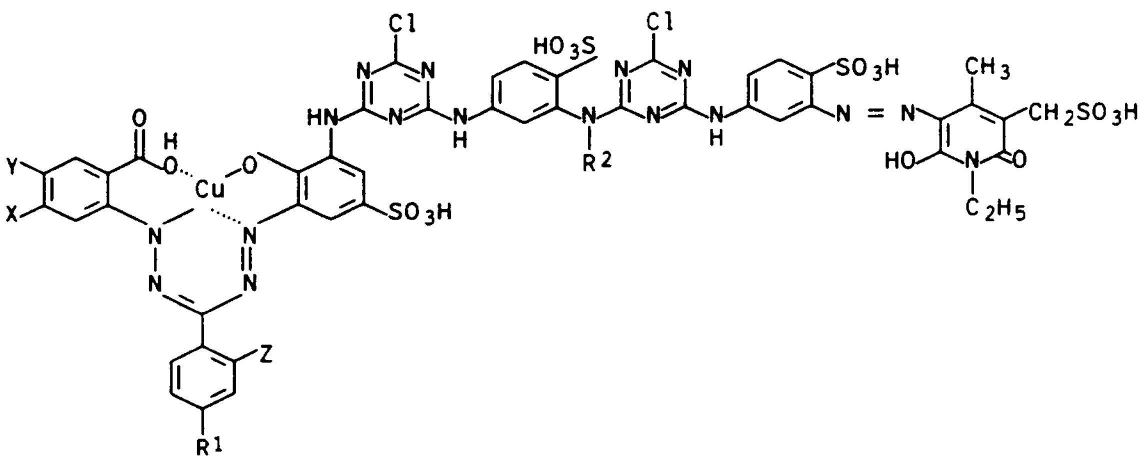

erhalten. Bei Anwendung der üblichen Ausziehmethoden färben sie Cellulosefasern in olivgrünen Tönen. Die Farbstoffe besitzen eine sehr gute Löslichkeit in Wasser, sind licht- und naßecht und zeigen gute Stabilität gegenüber oxidativen Einflüssen.

Tabelle 5

| Bsp.-Nr. | X | Y | Z | $R^1$ | $R^2$ |
|---|---|---|---|---|---|
| 37 | H | $SO_3H$ | H | H | $CH_3$ |
| 38 | H | H | $SO_3H$ | H | $CH_3$ |
| 39 | H | H | $SO_3H$ | $SO_3H$ | $CH_3$ |
| 40 | $SO_3H$ | H | H | F | $CH_3$ |
| 41 | $SO_3H$ | H | $SO_3H$ | H | $CH_3$ |
| 42 | H | $SO_3H$ | $SO_3H$ | H | $CH_3$ |

Beispiel 43

Zu einer Lösung von 124 g des Natriumsalzes der Verbindung der Formel

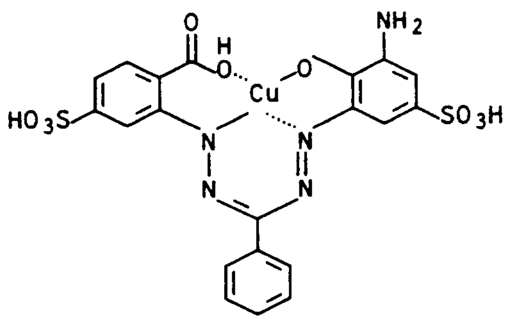

in 300 ml Wasser und 300 g Eis wurden 39 g Cyanurchlorid gegeben. Der 5 pH-Wert des Reaktionsgemischs wurde bis zum Ende der Acylierung durch Zugabe von Natriumhydrogencarbonat bei 5 bis 5,5 gehalten. Nach 2 Stunden wurden 19 g 3,4-Diaminobenzolsulfonsäure, gelöst in 200 ml Wasser, eingetragen. Die Suspension wurde auf 60 °C erwärmt und der pH-Wert durch Zusatz von Natriumhydrogencarbonat bei 7 bis 8 gehalten. Nach 6 Stunden 10 wurde der gebildete Farbstoff der Formel

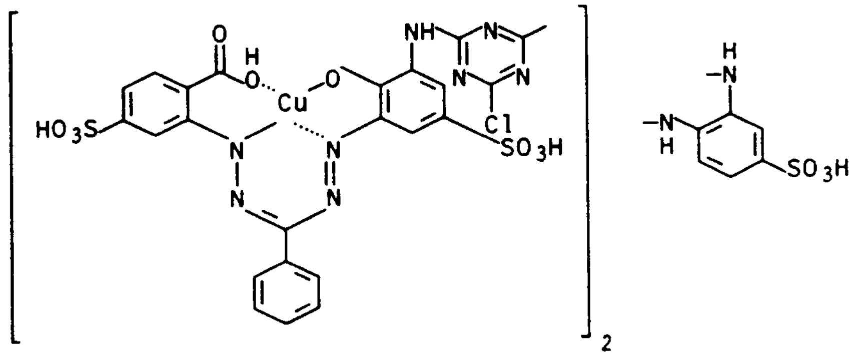

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen bemerkenswerte Stabilität gegenüber oxidativen Einflüssen auf.

In analoger Weise werden die in Tabelle 6 aufgeführten Farbstoffe der Formel

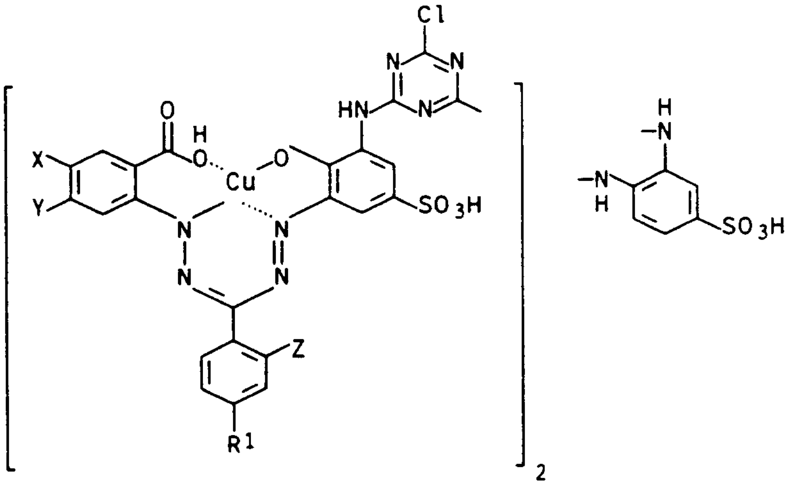

erhalten (als Natriumsalz). Bei Anwendung der üblichen Ausziehmethoden färben sie Cellulosefasern in blauen Tönen. Die Farbstoffe besitzen eine sehr gute Löslichkeit in Wasser, sind licht- und naßecht und zeigen gute Stabilität gegenüber oxidativen Einflüssen.

Tabelle 5

| Bsp.-Nr. | X | Y | Z | $R^1$ |
|---|---|---|---|---|
| 44 | $SO_3H$ | H | H | H |
| 45 | H | $SO_3H$ | H | F |
| 46 | $SO_3H$ | H | H | F |
| 47 | H | $SO_3H$ | $SO_3H$ | H |
| 48 | $SO_3H$ | H | $SO_3H$ | H |

## Patentansprüche

**1.** Reaktivfarbstoffe der Formel I

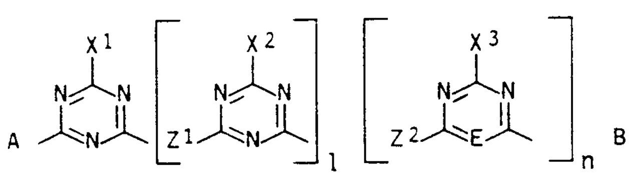 (I),

in der

| | |
|---|---|
| l | 0 oder 1, |
| n | 0 oder 1, |
| E | Stickstoff, |
| A | den Rest eines Azofarbstoffs, der über eine Imino- oder $C_1$-$C_4$-Alkyliminogruppe an den Triazinring gebunden ist, |
| B | den Rest eines Azofarbstoffs oder eines Formazanfarbstoffs, der jeweils über eine Imino- oder $C_1$-$C_4$-Alkyliminogruppe an den Triazinring gebunden ist, |
| $X^1$ und $X^2$ | jeweils Chlor, |
| $X^3$ | Chlor und |
| $Z^1$ und $Z^2$ | gleich oder verschieden sind und unabhängig voneinander jeweils einen Rest der Formel |

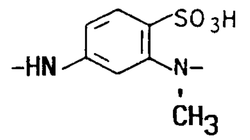 , 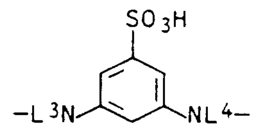 oder

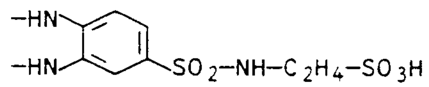 ,

wobei $L^3$ und $L^4$ gleich oder verschieden sind und unabhängig voneinander jeweils für Wasserstoff oder gegebenenfalls durch Cyano oder Hydroxy substituiertes $C_1$-$C_4$-Alkyl stehen, bedeuten,

mit der Maßgabe, daß l und n nicht gleichzeitig für 0 stehen, und daß wenn n 0 ist und $Z^1$ für den Rest der Formel

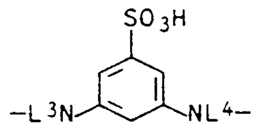 ,

in der $L^3$ und $L^4$ jeweils die obengenannte Bedeutung besitzen, steht, A auch den Rest eines Formazanfarbstoffs, der über eine Imino- oder $C_1$-$C_4$-Alkyliminogruppe an den Triazinring gebunden ist, bedeuten kann.

2. Reaktivfarbstoffe gemäß Anspruch 1, dadurch gekennzeichnet, daß B den Rest eines Azofarbstoffs, der über eine Imino- oder $C_1$-$C_4$-Alkyliminogruppe an den Triazinring gebunden ist, bedeutet.

3. Reaktivfarbstoffe gemäß Anspruch 1, dadurch gekennzeichnet, daß B mit dem Rest A identisch ist.

4. Verwendung der Reaktivfarbstoffe gemäß Anspruch 1 zum Färben oder Bedrucken von Hydroxygruppen oder Stickstoff enthaltenden Substraten.

5. Reaktivfarbstoffe der Formel Ia

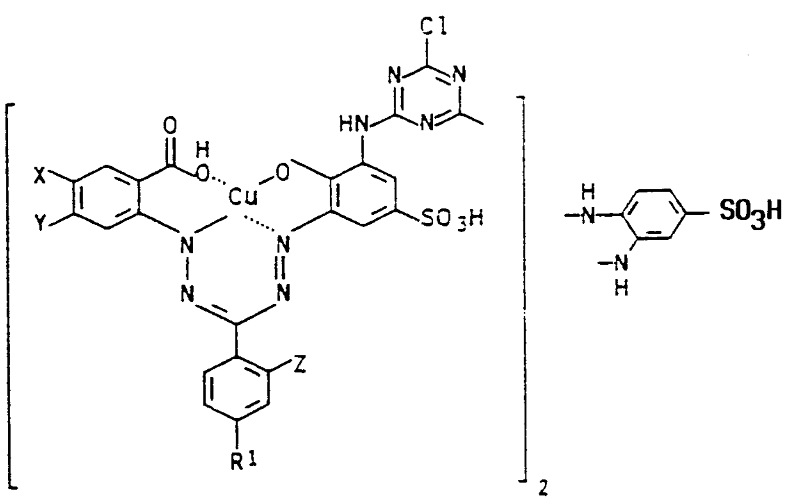 (Ia) ,

in der einer der beiden Reste X und Y Wasserstoff und der andere Hydroxysulfonyl,

Z Wasserstoff oder Hydroxysulfonyl und

$R^1$ Wasserstoff oder Fluor bedeuten.

## Claims

**1.** A reactive dye of the formula I

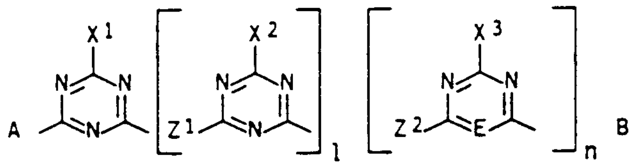

(I)

where

| | |
|---|---|
| l | is 0 or 1, |
| n | is 0 or 1, |
| E | is nitrogen, |
| A | is the radical of an azo dye attached to the triazine ring via an imino or $C_1$-$C_4$-alkylimino group, |
| B | is the radical of an azo dye or of a formazan dye which in either case is attached to the triazine ring via an imino or $C_1$-$C_4$-alkylimino group, |
| $X^1$ and $X^2$ | are each chlorine, |
| $X^3$ | is chlorine and |
| $Z^1$ and $Z^2$ | are identical or different and each is independently of the other a radical of the formula |

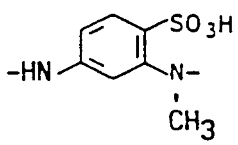 , 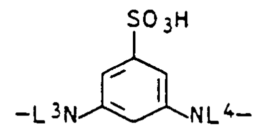 or

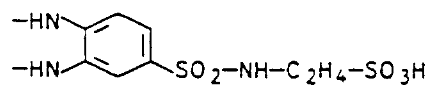 ,

where $L^3$ and $L^4$ are identical or different and each is independently of the other hydrogen or unsubstituted or cyano- or hydroxy-substituted $C_1$-$C_4$-alkyl,

with the proviso that l and n are not simultaneously 0 and that, if n is 0 and $Z^1$ is the radical of the formula

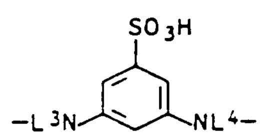

where $L^3$ and $L^4$ are each as defined above, A may also be the radical of a formazan dye which is attached to the triazine ring via an imino or $C_1$-$C_4$-alkylimino group.

**2.** A reactive dye as claimed in claim 1, wherein B is the radical of an azo dye which is bonded to the triazine ring via an imino or $C_1$-$C_4$-alkylimino group.

**3.** A reactive dye as claimed in claim 1, wherein B is identical to A.

**4.** The use of a reactive dye as claimed in claim 1 for dyeing or printing hydroxyl- or nitrogen-containing substrates.

**5.** A reactive dye of the formula Ia

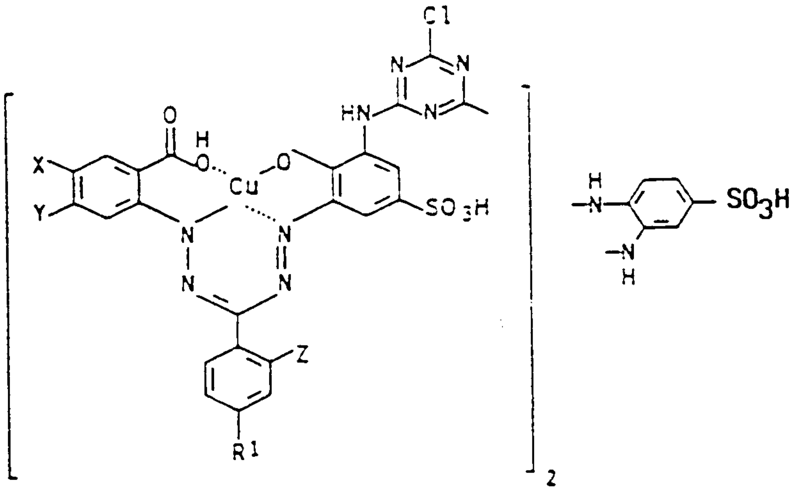

(Ia)

where one of the two radicals X and Y is hydrogen and the other is hydroxysulfonyl,

Z is hydrogen or hydroxysulfonyl and

$R^1$ is hydrogen or fluorine.

**Revendications**

**1.** Colorants à groupes réactifs de formule I

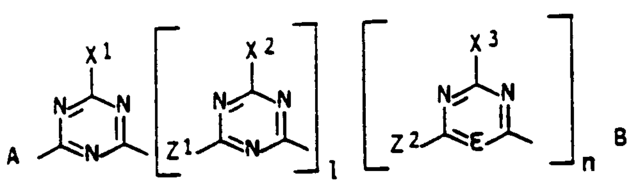

(I)

dans laquelle

| | |
|---|---|
| l | est 0 ou 1, |
| n | est 0 ou 1, |
| E | est de l'azote, |
| A | est le reste d'un colorant azoïque lié au cycle triazinique par un groupe imino ou alkylimino en $C_1$-$C_4$, |
| B | est le reste d'un colorant azoïque ou d'un colorant au formazane, chacun lié au cycle triazinique par un groupe imino ou alkylimino en $C_1$-$C_4$, |
| $X^1$ et $X^2$ | sont chacun du chlore, |
| $X^3$ | est du chlore, |
| $Z^1$ et $Z^2$ | sont semblables ou différents et correspondent, indépendamment l'un de l'autre, chacun à un reste de formule ou |

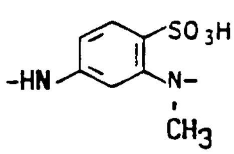

,

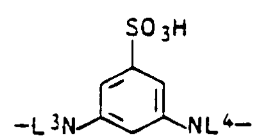

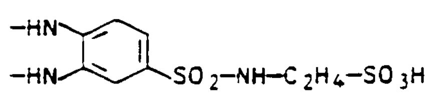

,

$L^3$ et $L^4$ étant semblables ou différents, et correspondant, indépendamment l'un de l'autre, chacun à de l'hydrogène ou, à un groupe alkyle en $C_1$-$C_4$ éventuellement substitué par un groupe cyano ou hydroxy,

à la condition que l et n ne correspondent pas à 0 en même temps, et que lorsque n est égal à 0 et que $Z^1$ est le reste de formule

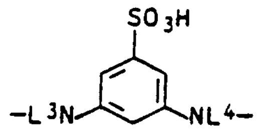

,

dans laquelle

$L^3$ et $L^4$ ont chacun la signification attribuée plus haut,

A puisse également correspondre au reste d'un colorant au formazane lié au cycle triazinique par un groupe imino ou alkylimino en $C_1$-$C_4$.

2. Colorants à groupes réactifs selon la revendication 1, caractérisé en ce que B est le reste d'un colorant azoïque lié au cycle triazinique par un groupe imino ou alkylimino en $C_1$-$C_4$.

3. Colorants à groupes réactifs selon la revendication 1, caractérisé en ce que B est identique au reste A.

4. Utilisation des colorants à groupes réactifs selon la revendication 1 pour la teinture ou l'impression de substrats contenant des groupes hydroxy ou de l'azote.

5. Colorants à groupes réactifs de formule Ia

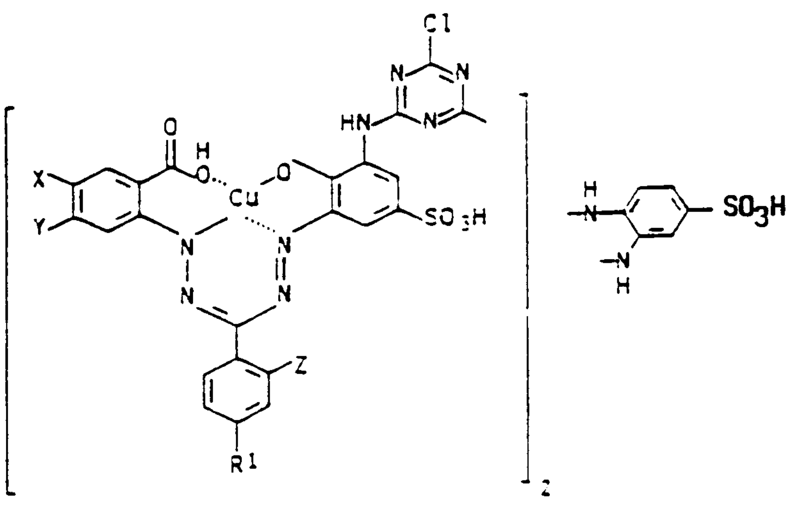

(Ia) ,

dans laquelle l'un des deux restes X et Y est de l'hydrogène et l'autre, un groupe hydroxysulfonyle,

Z est de l'hydrogène ou un groupe hydroxysulfonyle, et

$R^1$ est de l'hydrogène ou du fluor.